Europäisches Patentamt

European Patent Office

Office européen des brevets

(19)

(11) Numéro de publication : **0 452 252 A1**

# (12) DEMANDE DE BREVET EUROPEEN

(21) Numéro de dépôt : **91810148.6**

(22) Date de dépôt : **06.03.91**

(51) Int. Cl.⁵ : **H02K 16/02, H02K 37/12, G04C 3/14**

(30) Priorité : **11.04.90 CH 1236/90**

(43) Date de publication de la demande :
**16.10.91 Bulletin 91/42**

(84) Etats contractants désignés :
**CH DE FR GB IT LI**

(71) Demandeur : **SILCON ENTERPRISES LTD.
No. 8, Newportcenter 3rd. Floor, 116 Ma Tau
Kok Rd.
Kowloon (HK)**

(72) Inventeur : **Chan, Chung Yeung
D-3, 10, Shousonhill Road
West Hong Kong (HK)**
Inventeur : **Sirivai, Chong
90/50 Pattankakarn Road
Klongtan Prakanong Bangkok 10250 (TH)**

(74) Mandataire : **Rochat, Daniel Jean et al
Bovard SA Ingénieurs-Conseils ACP
Optingenstrasse 16
CH-3000 Bern 25 (CH)**

(54) **Moteur pas à pas pour pièce d'horlogerie.**

(57)     Moteur pas à pas comportant une bobine (12), un circuit magnétique et deux rotors (13,14) realisés sous forme de disques en aimant permanent aimantés selon la direction axiale. Les deux rotors (13,14) sont coaxiaux et disposés de part et d'autre du plan cosntitué par les pièces polaires statoriques (10a,10b).

## FIG. 1a

EP 0 452 252 A1

La présente invention concerne un moteur pas à pas monophasé pour applications horlogères, possédant une bobine, un circuit magnétique et deux rotors découplés mécaniquement. Ce type de moteur trouve son application chaque fois qu'on a besoin de trains d'engrenage découplés mécaniquement entre eux et entraînés par des rotors différents comme, par exemple, la montre avec correction de l'heure électronique. De tels moteurs pas à pas sont connus de l'art antérieur. Dans le "Patent Abstract of Japan 58-9086", il est décrit un moteur comprenant deux rotors découplés mécaniquement, actionnés par une seule bobine. L'inconvénient de ce type de moteur est d'avoir une surface relativement importante due à la présence de deux circuits magnétiques en parallèle. De plus, il ressort du dessin que les rotors sont du type bipolaire à aimantation radiale. De tels rotors possèdent seulement deux positions d'équilibre stable par tour. Pour afficher les soixante positions de la seconde sur le cadran d'une montre, il nécessite donc un rapport de transmission égal à 30 entre l'axe du rotor et l'axe de la seconde. Ce rapport de transmission implique généralement deux trains d'engrenage.

Un autre moteur comportant un double rotor et destiné à un mouvement d'horlogerie est décrit dans la demande de brevet FR-A-2.475.247. Le but recherché dans cette demande est essentiellement différent de celui de la présente invention, puisqu'il s'agit alors uniquement de compenser la réaction mécanique axiale apparaissant lors de l'emploi d'un moteur comportant un seul disque en guise de rotor. D'autre part, les deux disques sont fixés sur un axe commun et tournent à la même vitesse.

D'autres applications utilisent des moteurs comportant un double rotor en forme de disque; en particulier, la demande FR-A-2.266.971 décrit un plus gros moteur destiné à un compresseur, une pompe ou une soufflante, et dont les deux rotors en forme de disque sont disposés de part et d'autre d'un enroulement statorique annulaire. Dans ce cas aussi, les deux rotors tournent à la même vitesse, des couples différents pouvant leur être appliqués en utilisant des aimants permanents de force différente sur chacun des disques. Le brevet CH-A-384.067 propose une autre application d'un tel moteur comprenant deux rotors en forme de disque, les deux disques, comportant chacun un nombre de pôles différents, étant disposés sur un axe commun pouvant coulisser longitudinalement de manière que l'on puisse choisir la vitesse de rotation de l'axe en faisant entraîner l'un ou l'autre des rotors.

La présente invention permet de remédier aux inconvénients mentionnés plus haut en proposant un nouveau type de moteur possédant un seul circuit magnétique statorique, un rotor constitué de deux disques tournant simultanément à des vitesses différentes et présentant chacun plus que 2 positions d'équilibre stable par tour afin de réduire le rapport de transmission entre l'axe du moteur et l'axe de la seconde.

L'invention sera mieux comprise à la lecture de la description qui va suivre, en se référant au dessin annexé, dans lequel :

les figures 1a et 1b représentent un exemple d'exécution du moteur selon l'invention;

la figure 2 représente schématiquement un rotor aimanté utilisé dans le moteur de la figure 1;

la figure 3 représente le diagramme des couples statiques du moteur de la figure 1;

la figure 4 représente un exemple des impulsions d'alimentation du moteur de la figure 1;

la figure 5a représente la vue en plan d'un exemple d'application du moteur dans une montre à correction électronique de l'heure;

la figure 5b représente la vue en coupe d'un exemple d'application du moteur dans une montre à correction électronique de l'heure.

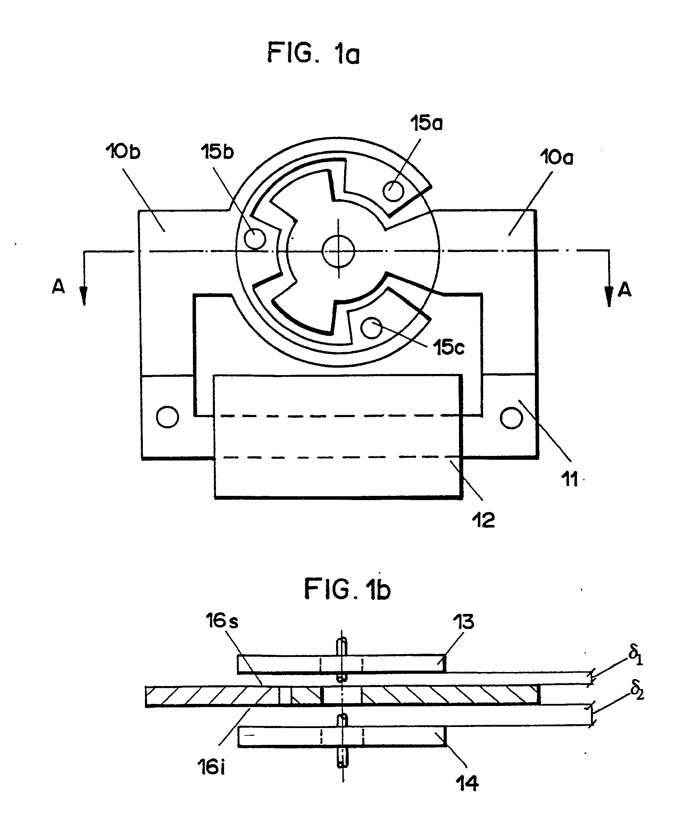

La figure 1 représente un exemple de réalisation du moteur selon l'invention. Ce moteur possède un circuit magnétique statorique comprenant les pièces polaires 10a et 10b, le noyau de bobine 11, la bobine 12 et les rotors 13 et 14. Les pièces polaires 10a et 10b sont réalisées en matériau ferromagnétique doux et se trouvent dans un même plan. L'imbrication des pièces polaires 10a et 10b permet de créer, lorsque l'on injecte un courant dans la bobine 12, des pôles magnétiques alternés, distribués aux deux surfaces, supérieure et inférieure, (16s, 16i) des pièces polaires. A des distances $_1$ resp. $_2$ des surfaces (16s, 16i) se trouvent les rotors (13, 14) réalisés sous forme de disques en aimant permanent.

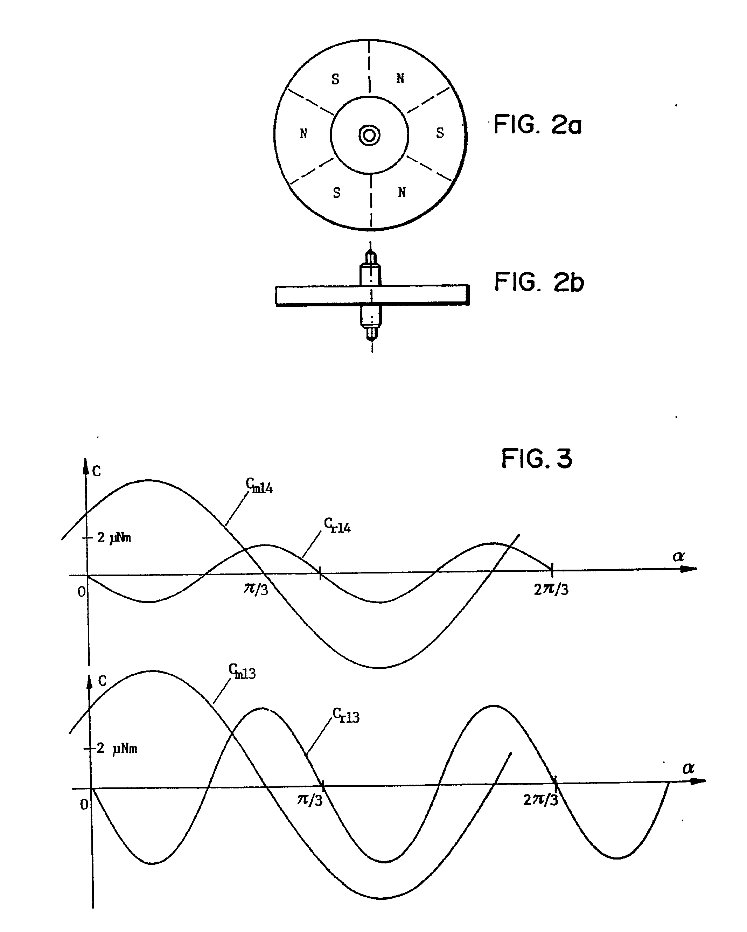

La figure 2 représente le rotor aimanté avec la répartition des pôles magnétiques sur sa périphérie. Ces deux rotors coaxiaux dont l'axe de rotation est perpendiculaire au plan des pièces polaires peuvent tourner librement l'un par rapport à l'autre.

Dans la partie dentée de la pièce polaire 10b, des trous 15a, 15b et 15c sont créés. Ces trous permettent de donner aux rotors des couples de rétention dus à la variation de la réluctance du circuit magnétique. On peut aussi obtenir le même effet en créant des trous dans la partie dentée de la pièce polaire 10a. Dans cet exemple de réalisation les entrefers ($_1$, $_2$) entre les rotors et le stator sont différents. Ceci a pour but de créer des couples de rétention différents au niveau des deux rotors permettant une commande de rotation sélective.

La figure 3 représente le diagramme des couples statiques s'exerçant sur chaque rotor du moteur. Dans cette figure $C_{r14}$ représente le couple de rétention du rotor 14, $C_{r13}$ celui du rotor 13. Les couples mutuels dus à l'interaction des flux statoriques et rotoriques sont représentés par $C_{m14}$ et $C_{m13}$. On remarque que les couples $C_{m14}$ et $C_{m13}$ sont sensiblement égaux, par contre $C_{r13}$ est beaucoup plus grand que $C_{r14}$.

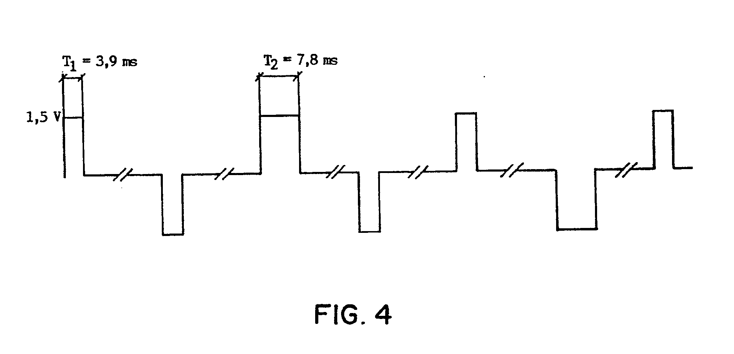

La figure 4 représente un exemple des impulsions d'alimentation du moteur de la figure 1 permettant de faire tourner le rotor 14 à une vitesse moyenne trois fois plus grande que celle du rotor 13. Quand la bobine du moteur reçoit une impulsion de durée $T_1$ de 3,9 ms, les deux rotors se déplacent, mais seul le rotor 14 peut franchir le pas grâce à son faible couple de rétention, par contre le rotor 13, à cause du couple $C_{r13}$ élevé, revient à sa position de départ après la disparition de l'impulsion. Lorsque le moteur reçoit l'impulsion de durée $T_2$ de 7,8 ms, étant donné la plus grande énergie fournie, les deux rotors franchissent leurs pas. On peut comprendre aisément qu'avec ce type d'impulsion d'alimentation, on peut imposer aux deux rotors des vitesses moyennes de rotation différentes.

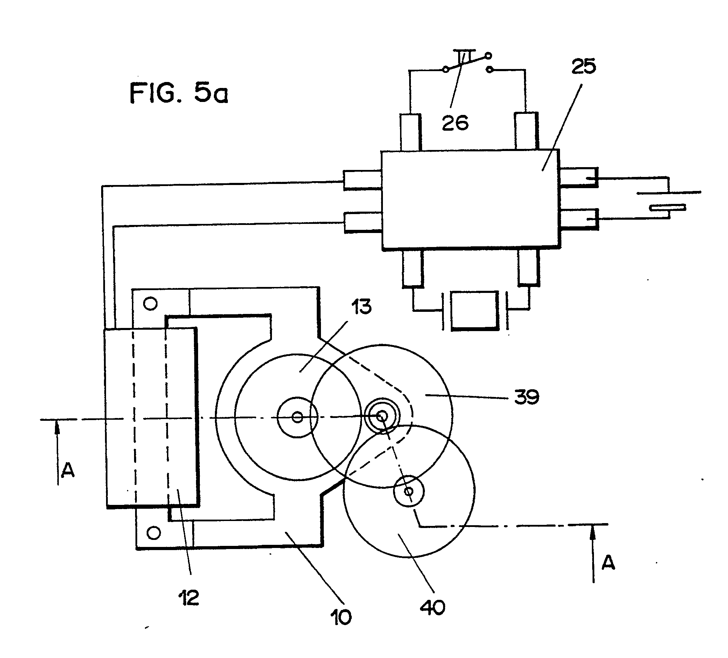

La figure 5a représente un circuit intégré 25 connecté au moteur pas à pas, représenté ici par la bobine 12, le stator 10 et l'un des deux rotors 13. L'interrupteur 26, actionné par un poussoir, par exemple, permet de changer la fréquence des impulsions motrices pour la mise à l'heure du mouvement. La partie du rouage représenté comprend le rotor 13, la roue des heures 39 et la roue de minuterie 40.

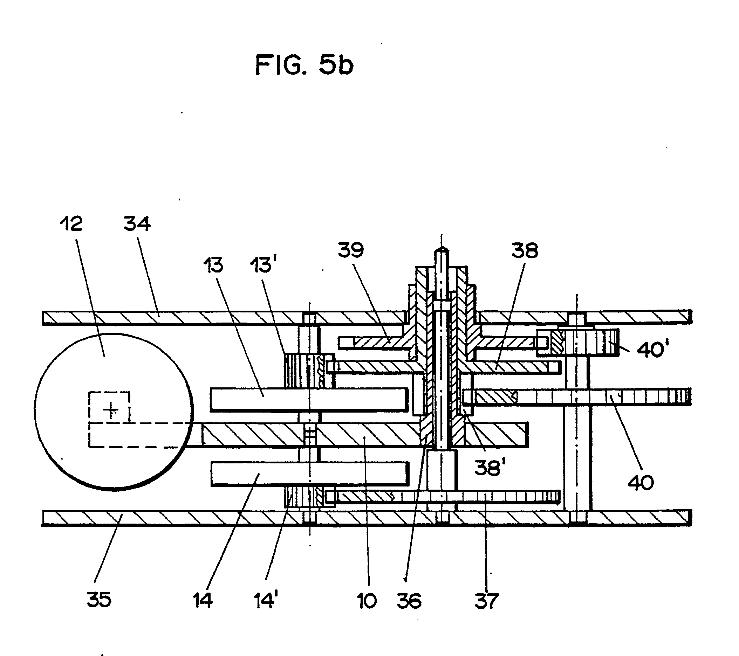

La figure 5b représente la coupe A-A' de la figure 5a. Le logement du rouage se fait à l'aide du pont inférieur 35, du stator 10 et du pont supérieur 34. Le pignon 14' du rotor inférieur 14 entraîne la roue des secondes 37. La roue des secondes 37 est logée d'une part dans le pont inférieur 35 et d'autre part guidée par le tube 36, chassé dans le stator 10. Le pignon 13' du rotor supérieur 13, battant la minute, entraîne la roue des minutes 38 dont le pignon 38' entraîne la roue de minuterie 40. Le pignon 40' de la roue de minuterie 40 engrène avec la roue des heures 39.

**Revendications**

1. Moteur pas à pas pour pièce d'horlogerie comportant une seule bobine, un seul circuit magnétique et deux rotors entraînant deux trains d'engrenages découplés mécaniquement, caractérisé en ce que lesdits rotors sont constitués de deux disques en aimant permanent, aimantés selon la direction axiale et comportant le même nombre de pôles répartis sur la périphérie des rotors, et en ce que lesdits rotors sont coaxiaux, montés sur deux axes indépendants et disposés de part et d'autre du plan constitué par les pièces polaires statoriques.

2. Moteur selon la revendication 1, caractérisé en ce que les entrefers entre la surface de chaque rotor et la surface statorique correspondante sont sensiblement différents.

3. Moteur selon l'une des revendications précédentes, caractérisé en ce que l'une des pièces polaires dudit circuit magnétique comporte des trous destinés à créer des couples de rétention auxdits rotors.

4. Moteur selon l'une des revendications précédentes, caractérisé en ce que le nombre de pôles magnétiques de chaque rotor est au moins égal à 6.

5. Procédé de commande du moteur selon l'une des revendications précédentes, caractérisé en ce qu'on fournit au moteur un train d'impulsions périodiques comportant deux types d'impulsions de durées différentes.

6. Montre avec correction de l'heure électronique, caractérisée en ce qu'elle comporte au moins un moteur selon l'une des revendications précédentes.

## FIG. 1a

10b     15b       15a       10a

A

A

15c

11

12

## FIG. 1b

16s       13

$\delta_1$

$\delta_2$

16i

14

FIG. 2a

FIG. 2b

FIG. 3

FIG. 4

FIG. 5a

# FIG. 5b

Office européen
des brevets

**RAPPORT DE RECHERCHE EUROPEENNE**

Numéro de la demande

EP   91 81 0148

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.5 ) |
|---|---|---|---|
| D,Y | FR-A-2266971 (CANADIAN GENERAL ELECTRIC) <br> * page 10, lignes 8 - 39; figures 3, 5. * <br> --- | 1, 2, 4-6. | H02K16/02 <br> H02K37/12 <br> G04C3/14 |
| D,Y | PATENT ABSTRACTS OF JAPAN <br> vol. 7, no. 78 (P-188)(1223) 31 mars 1983, <br> & JP-A-58 9086 (CITIZEN) 19 janvier 1983, <br> * le document en entier * <br> --- | 1, 2, 4-6. | |
| A | PATENT ABSTRACTS OF JAPAN <br> vol. 8, no. 231 (E-274)(1668) 24 octobre 1984, <br> & JP-A-59 113750 (MATSUSHITA) 30 juin 1984, <br> * le document en entier * <br> --- | 1, 2. | |
| D,Y | CH-A-384067 (ELEKTRO-MOTOREN) <br> * page 4, lignes 83 - 120; figure 16. * <br> --- | 1, 2, 4. | |
| D,Y | FR-A-2475247 (JAZ) <br> * page 1, ligne 28 - page 2, ligne 12; figures 1, 2. * <br> --- | 1, 2, 4. | |
| A | US-A-4644207 (CATTERFELD ET AL) <br> * colonne 1, ligne 63 - colonne 2, ligne 40; figure 1. * <br> --- | 1. | **DOMAINES TECHNIQUES RECHERCHES (Int. Cl.5 )** |
| A | GB-A-1531314 (DAINI) <br> * page 2, ligne 122 - page 3, ligne 10; figures 8-10. * <br> ----- | 3. | H02K <br> G04C |

Le présent rapport a été établi pour toutes les revendications

| Lieu de la recherche | Date d'achèvement de la recherche | Examinateur |
|---|---|---|
| LA HAYE | 08 MAI 1991 | TIO K.H. |

EPO FORM 1503 03.82 (P0402)